# EUROPEAN PATENT SPECIFICATION

(11) **EP 3 356 298 B1**
(45) Date of publication and mention of the grant of the patent: **04.08.2021**
(21) Application number: 16795150.8
(22) Date of filing: 30.09.2016
(51) Int. Cl.: C02F 1/00, A47J 31/60, C02F 1/28, C02F 1/44, C02F 1/42

(54) **PERCOLATION-TYPE FILTERING DEVICE**
FILTRIERUNGSVORRICHTUNG VOM PERKOLATIONSTYP
DISPOSITIF DE FILTRATION DE TYPE À PERCOLATION

(30) Priority: 30.09.2015 IT UB20154053
(43) Date of publication of application: 08.08.2018
(73) Proprietor: Laica S.p.A., 36021 Barbarano Vicentino (VI) (IT)
(72) Inventor: MORETTO, Maurizio, I-36100 Vicenza (IT)
(74) Representative: Locas, Davide
(86) International application number: PCT/IB2016/055863
(87) International publication number: WO 2017/056048

(56) References cited:
- EP-A1- 2 615 066
- DE-A1- 19 615 102
- US-A1- 2011 079 551
- US-A1- 2014 144 829

## Description

The invention relates to a percolation type filtering device of the type including the features mentioned in the preamble of the main claim. Such filtering devices are known, for example, from documents DE196 15102, EP2615066 and US2014/0144829.

In percolation type filtering devices, the pressure gradient to which the fluid to be filtered is subjected is relatively low because the filtration takes place substantially by means of gravitational force. The filtering means normally contain layers of activated carbon, ion-exchange resin and similar materials which, owing to the effect of the respective surface tensions, may cause air to become trapped in the filtering layer. This in turn causes some disadvantages. A first disadvantage is that, when the filtering layer retains air, the cross-section of passage useful for the flow of liquid to be filtered is reduced, which flow is consequently slowed down. This causes a low flow rate of filtered water and a consequent increase in the time necessary for the filtration.

A second disadvantage which aggravates the first disadvantage is a result of the fact that the areas of filtering layer which trap air do not participate in the filtration with resultant non-homogeneous (poor) use of the material which forms the filter bed. This involves a premature exhaustion of the filter cartridge and/or malfunction thereof towards the end of the service-life thereof.

That problem is even more relevant in solutions which provide for the use of two different filter cartridges which can be individually replaced and which are typically intended for double filtration, a first directed towards carrying out an ion-exchange action and a second for reducing the bacterial load.

For the purpose of improving the discharge of water, the international patent application WO 2012/168896 in the name of the same Applicant proposes the use of ventilation means in order to give off gas which is stored in a chamber which is defined between the two cartridges at the same time as the flow of liquid which is intended to be filtered.

Though that solution is found to be effective in preventing masses of air remaining trapped inside the filtering material and therefore improving the discharge capacity of the water, the production of the ventilation means is found to be complex to some degree.

In particular, on the basis of a first embodiment, the ventilation means are formed by means of a channel which is formed in the cartridge upstream of the discharge path.

It is evident that this solution requires the construction of specific cartridges which are intended to be used only in those double-filtration systems.

A second embodiment instead provides for the use of a pipe which extends along the wall which forms the dividing element of the jug. That pipe is obtained by means of a tube which connects the chamber defined between the filter cartridges to the outer side of the jug.

However, during the different construction steps of the jug, the attachment of the tube to the intermediate chamber which divides the first cartridge from the second cartridge defines a critical zone in terms of physical and mechanical cleanliness. Consequently, if over time it should be subjected to wear, splitting or suffer any damage, there could be a direct leak of the liquid from the intermediate chamber to the lower reservoir. If this should occur, the liquid will not be regularly filtered by the filter with an antibacterial action with a resultant risk of bacterial contamination.

Furthermore, however, the solution is rather complex from the construction point of view and may involve the accumulation of dirt or other material at the discharge pipe. Therefore, that solution is also found to be poorly suitable if the jug is used with a single filter cartridge because the accumulation of bacterial load which may result from the presence of the pipe is not correctly filtered in the absence of the second cartridge.

Another example of a jug which is provided with a ventilation opening is described in the patent DE19615102. However, this solution is directed towards solutions with a single filtering means and still has the same disadvantages set out above.

Therefore, the problem on which the present invention is based is to provide a filtering device which is structurally and functionally configured to overcome all the disadvantages set out with reference to the cited prior art. This problem is solved by the invention by means of a filtering device which is constructed in accordance with the appended claims.

The features and advantages of the invention will be better appreciated from the detailed description of some embodiments thereof which are illustrated by way of non-limiting example with reference to the appended drawings, in which:
Figure 1 is a side view of a filtering device according to the invention;
Figure 2 is a plan view of the filtering device of Figure 1;
Figures 3 and 3A are a sectional side view and a relevant detail of a particular funnel-like dividing element of the filtering device according to the invention; and
Figure 4 is a plan view of the funnel-like dividing element of Figure 3.

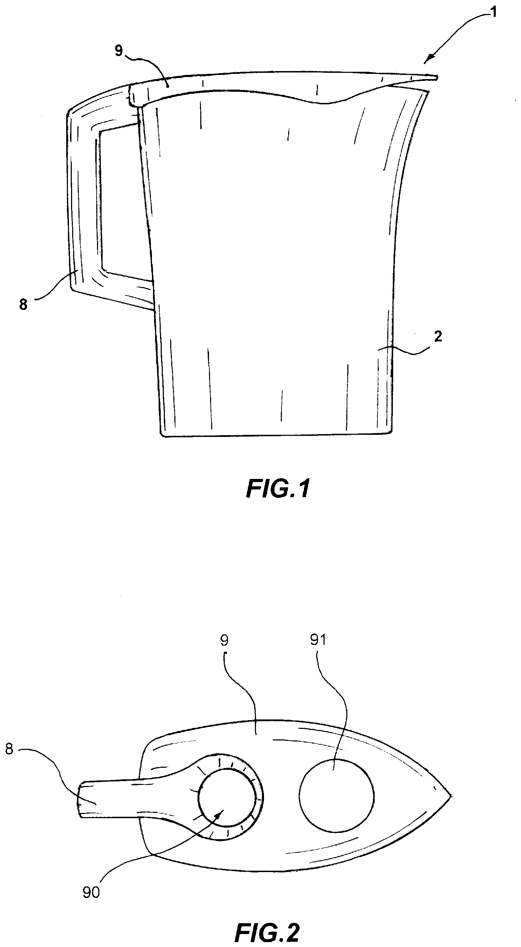

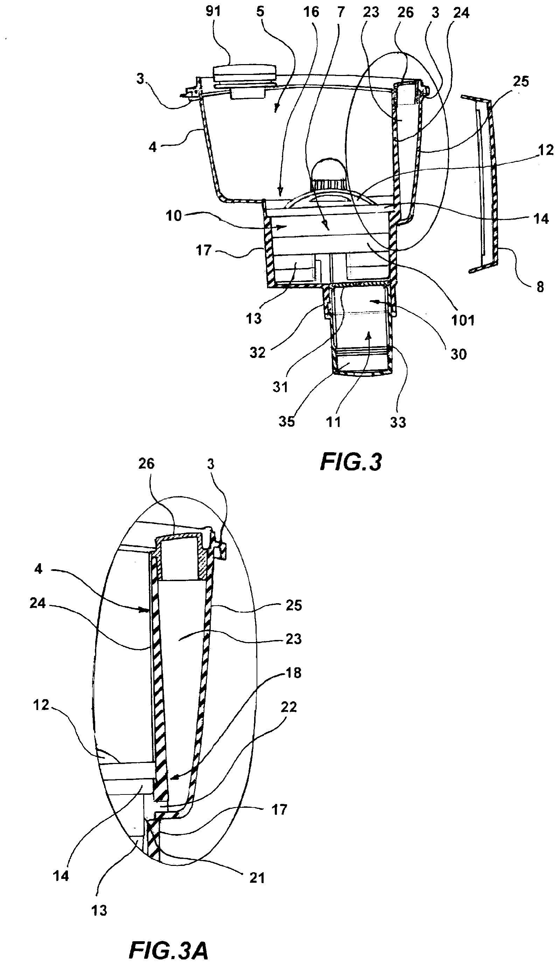

Initially with reference to Figure 1, a percolation type filtering device is generally designated 1. The filtering device 1 comprises an outer casing 2, for example, of jug-like form, in which there is received, preferably suspended by means of a flanged support 3, a funnel-like dividing element 4, those last means being better illustrated in Figure 3.

It will still be appreciated that the invention can further be applied to different systems, such as, for example, kettles, cafetieres, in-line filters and the like, and more generally all portable percolation type filtering devices. It should also be noted that, in the context of the present invention, the term "portable" is intended to indicate a device which can be readily transported by hand by a person.

The funnel-like dividing element 4 is intended to store the water to be filtered and, once received in the outer casing 2, a reservoir is defined therebelow for storing the filtered water.

There is defined in the dividing element 4 a flow path 7 of the water to be filtered which extends in a downstream direction with respect to the dividing element 4 through first and second filtering elements 10, 11 which are arranged sequentially and which are passed through by means of gravitational force.

Preferably, the device 1 further comprises a cover 9 which covers the outer casing 2 and consequently the dividing element 4. According to a preferred embodiment, there is defined in the cover 9 an opening 90 for the passage of the water towards the inner side of the casing 2 and specifically towards the dividing element 4. Preferably, there are further provided means for establishing the filtration cycles carried out and/or for indicating the depletion level of the filtering capacity of the first and/or second filtering elements 10, 11 of the type known per se.

Preferably, the first filtering element 10 comprises a replaceable cartridge type filter 101 which, in at least some of the embodiments described below, may be of the type known conventionally, for example, of the type known from the description of the patent applications WO 2009/000374 or WO 2010/115643 by the same applicant.

Preferably, the cartridge type filter 101 comprises an upper portion 12 and a lower portion 13 which are joined together at a peripheral edge 14 which projects radially towards the outer side and which constitutes a seal with which the cartridge type filter 101 is connected in a sealing manner in an opening 16 of a seat 17 which is formed at the base of the dividing element 4. The opening 16 with the upper portion 12 of the cartridge which is provided with holes (not illustrated in the Figure) defines an inlet opening for the water to be filtered in the flow path. In one example, in the lower portion 13 there is contained a filter bed which cannot be seen in the Figures and which can be composed in a manner known per se by an admixture of materials which are selected from activated carbons, salts, ion-exchange resins and the like.

The sealing connection between the cartridge type filter 101 and the seat 17 is brought about at a connection portion 18 thereof, preferably defined by an annular region of a liner which forms the perimeter wall of the seat 17.

When the cartridge type filter 101 is inserted into the seat 17 of the dividing element 4, there remains defined a chamber 21 between the seat 17 and the casing of the lower portion 13 of the cartridge type filter.

There is further formed in the seat 17 a discharge opening 30, through which the water filtered by the first filtering element 10 passes.

The discharge opening is further provided for receiving in a removable manner the second filtering element 11.

To that end, the discharge opening comprises a connection element with respect to the second filtering element 11. By way of example, that connection element may be in the form of a bayonet type system, screw thread or simply an interference type connection.

In this manner, the water filtered by the first filtering element 10 is conveyed by gravitational force towards the second filtering element 11.

Preferably, the opening 30 is provided with an additional filter 31, for example, of the net type, which serves to retain any granules of filter bed released from the first filtering element into the chamber 21. Preferably, the opening 30 is also provided, at the outlet from the dividing element 4, with a collar 32, in the region of which there is arranged the connection element and in which there is fitted the second filtering element 11.

Preferably, the second filtering element 11 therefore comprises a casing 33 which is capable of rapid connection to the collar 32, for example, as set out above, of the screw or bayonet type, or also simply by means of interference, so as to allow the individual removal of the second filtering element 11 from the dividing element 4.

The second filtering element 11 is preferably of the type with bacterial filtration.

A first example of that filtering element is constituted by a hollow-fibre type filter 35, such as the one described in CA2350292, which allows a micro-filtration of the water processed, for example, by reverse osmosis.

It will nevertheless be appreciated that as an alternative to hollow fibres there may also be used different filtration technologies, such as a membrane type system, a cartridge with chemical bactericidal elements (for example, iodine, bromine) or other solutions of the nano-membrane type or solutions with electrical charge which acts as a biocide.

Normally, the service-life of the second filtering element is substantially greater than the service-life of the first filtering element and, with the structure indicated above, the individual replacement thereof is possible.

The device 1 further comprises a ventilation opening 22 which places in communication the seat with the outer side of the outer casing 2 in order to discharge the air or gas trapped in the chamber 21 and thereby to improve the flow of water through the filter bed of the cartridge type filter 10.

The ventilation opening 22 opens in the seat 17 in a downstream direction along the discharge path with respect to the connection portion 18.

In other words, the ventilation opening 22 is formed adjacent to the connection portion 18 in such a manner that it is below the peripheral edge 14 when the cartridge type filter 101 is received in the seat 17. Preferably, the ventilation opening 22 is formed in such a position as to be arranged immediately below the peripheral edge 14 so that the water level does not tend to reach the opening 22 itself.

In the device 1 according to the present invention, the ventilation opening 22 expands at a space 23 which is defined between a first perimeter wall 24 and a second perimeter wall 25 of the funnel-like dividing element 4.

Therefore, the space 23 defines an expansion of the ventilation opening 22.

Preferably, the space 23 extends in a vertical direction along the funnel-like dividing element 4.

Furthermore, preferably a portion of the first perimeter wall 24 defines a portion of a reservoir 5 for storing water to be filtered while the second perimeter wall 25 faces the outer casing 2. The reservoir 5 for storing water to be filtered is entirely superimposed on the seat 17.

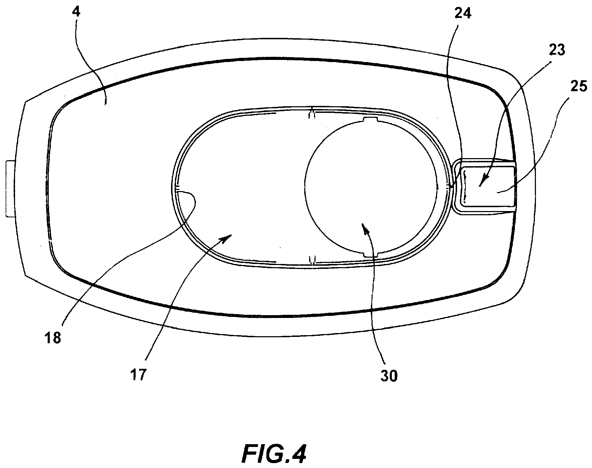

The space 23 extends in a vertical direction substantially as far as an upper portion of the outer casing 2, preferably at or in the region of the cover 9. It should also be noted that preferably the first perimeter wall extends longitudinally with a U-shaped cross-section, as may be seen in Figure 4.

Furthermore, preferably, the second perimeter wall 25 is connected to the flanged support 3 by means of which the dividing element 4 is suspended on the outer casing 2.

Preferably, the device 1 further comprises a handle 8 which is connected to the outer casing 2. On the basis of that embodiment, the space 23 is constructed at a portion of the dividing element 4 adjacent to the handle 8.

Preferably, the space 23 further comprises a removable cap 26 which prevents the accidental introduction of water or other material inside the space, in particular if only the first filtering element 10 is used.

According to a preferred embodiment, the seat 17 and the discharge opening 30 are arranged to be offset with respect to a centre plane of the outer casing 2.

In this manner, the seat 17 and the discharge opening 30 are preferably constructed in the dividing element 4 so as to be directed at the same side of the ventilation opening 22 and the space 23.

It will be appreciated that a filtering device constructed in this manner is suitable not only for equipping filtering elements of the replaceable type, such as those described, but also devices in which the second filtering element is of the non-removable type and/or are not provided.

In this manner, it is possible to produce standardized cartridge type filtering devices which can be used both as filtering devices with multiple filters as described above and as conventional devices in which there is provided a single filtering element which is constituted by the replaceable cartridge type filter 10.

Last but not least, the above-mentioned advantages are obtained without radical modifications of the architecture of the conventional filtering devices and/or the replaceable cartridge type filters, to the benefit of economy of production.

## Claims

1. A percolation type filtering device (1) comprising:
an outer casing (2);
a funnel-like dividing element (4) which is for storing the water to be filtered and which is received in the outer casing (2) which defines a reservoir therebelow for storing the filtered water, the funnel-like dividing element (4) being capable of defining a flow path (7) of the water to be filtered;
a seat (17) which is formed in the funnel-like dividing element (4) in the region of the flow path (7) in order to receive in a removable manner a first filtering element (10),
the first filtering element (10) comprising a replaceable cartridge type filter (101);
a discharge opening (30) which is for the filtered water from the first filtering element (10) and which is formed in the seat (17) and which is capable of receiving in a removable manner a second filtering element (11),
wherein a connection portion (18) is defined in the seat (17), in the region of which the cartridge type filter (101) is connected in a sealing manner in the seat (17);
a ventilation opening (22) which places in communication the seat (17) with the outer side of the outer casing (2);
wherein the ventilation opening (22) opens in the seat (17) in a downstream direction along the discharge path with respect to the connection portion (18) and wherein the funnel-like dividing element (4) comprises a first perimeter wall (24) and a second perimeter wall (25), between which there is defined a space (23) which defines an expansion of the ventilation opening (22), **characterized in that** the space (23) extends in a vertical direction substantially as far as an upper portion of the outer casing (2) and **in that** the funnel-like dividing element (4) defines a reservoir (5) which is intended for the storage of water to be filtered, the reservoir (5) being entirely superimposed on the seat (17), the discharge opening (30) comprising a connection element for a removable connection with respect to the second filtering element (11).

2. A filtering device (1) according to claim 1, wherein a chamber (21) is defined between an outer casing (13) of the cartridge type filter (101) and the seat (17) when the cartridge is received in the seat (17), the chamber (21) being arranged between the filtering means (10, 11) and the ventilation opening (22) facing the chamber (21).

3. A filtering device (1) according to claim 1 or 2, comprising a second filtering element (11) which is arranged in the region of the discharge opening (30).

4. A filtering device (1) according to claim 3, wherein the second filtering element (11) comprises a removable cartridge type filter (35) which can be fitted on the discharge opening (30) .

5. A filtering device (1) according to claim 3 or 4, wherein the second filtering element (11) comprises a hollow-fibre filter (35).

6. A filtering device (1) according to any one of the preceding claims, wherein a portion of the first perimeter wall (24) defines a portion of an additional reservoir (5) for storing water to be filtered and the second perimeter wall (25) faces the outer casing (2).

7. A filtering device (1) according to any one of the preceding claims, wherein the second perimeter wall (25) is connected to a flanged support (3), by means of which the dividing element (4) is suspended on the outer casing (2).

8. A filtering device (1) according to any one of the preceding claims, wherein the space (23) comprises a removable cap (26).

9. A filtering device (1) according to any one of the preceding claims, further comprising a handle (8) which is connected to the outer casing (2), the space being constructed in the region of a portion of the funnel-like dividing element (4) which faces the handle (8).

10. A filtering device (1) according to any one of the preceding claims, wherein the seat (17) and the discharge opening (30) are arranged to be offset with respect to a centre plane of the outer casing (2).

11. A filtering device according to any one of the preceding claims, wherein the connection element is arranged in the region of a collar (32) which is constructed at the outlet from the funnel-like dividing element (4).

12. A filtering device according to any of the preceding claims, wherein the upper portion of the outer casing (2) is arranged at or in the region of a cover (9).

13. A filtering device according to any one of the preceding claims, wherein the ventilation opening (22) is constructed adjacent to the connection portion (18) in such a manner that the ventilation opening (22) is immediately below a peripheral edge (14) of the cartridge when the cartridge type filter (101) is received in the seat (17).

## Patentansprüche

1. Filtervorrichtung vom Perkolationstyp (1), umfassend:
- ein Außengehäuse (2);
- ein trichterartiges Trennelement (4), das zum Speichern des zu filternden Wassers vorgesehen ist und das im Außengehäuse (2) aufgenommen ist, das darunter einen Vorratsbehälter zum Speichern des gefilterten Wassers bildet, wobei das trichterartige Trennelement (4) in der Lage ist, einen Strömungsweg (7) des zu filternden Wassers zu bilden;
- einen Sitz (17), der im trichterartigen Trennelement (4) im Bereich des Strömungswegs (7) ausgebildet ist, um auf entfernbare Weise ein erstes Filterelement (10) aufzunehmen; wobei das erste Filterelement (10) einen austauschbaren Kartuschenfilter (101) aufweist;
- eine Auslassöffnung (30), die für das gefilterte Wasser aus dem ersten Filterelement (10) vorgesehen ist und die im Sitz (17) ausgebildet ist und die in entfernbarer Weise ein zweites Filterelement (11) aufnehmen kann;
- wobei ein Verbindungsabschnitt (18) im Sitz (17) ausgebildet ist, in dessen Bereich der Kartuschenfilter (101) abdichtend mit dem Sitz (17) verbunden ist;
- eine Belüftungsöffnung (22), die den Sitz (17) mit der Außenseite des Außengehäuses (2) in Verbindung bringt;
- wobei sich die Belüftungsöffnung (22) im Sitz (17) stromabwärts entlang des Auslasswegs in Bezug auf den Verbindungsabschnitt (18) öffnet und wobei das trichterartige Trennelement (4) eine erste Umfangswand (24) und eine zweite Umfangswand (25) aufweist, zwischen der ein Raum (23) ausgebildet ist, der eine Erweiterung der Belüftungsöffnung (22) bildet, **dadurch gekennzeichnet, dass** sich der Raum (23) in vertikaler Richtung im Wesentlichen bis zu einem oberen Teil des Außengehäuses (2) erstreckt, und dadurch, dass das trichterartige Trennelement (4) einen Vorratsbehälter (5) bildet, der zur Speicherung des zu filternden Wassers vorgesehen ist, wobei der Vorratsbehälter (5) vollständig auf dem Sitz (17) aufliegt, wobei die Auslassöffnung (30) ein Verbindungselement für eine entfernbare Verbindung in Bezug auf das zweite Filterelement (11) aufweist.

2. Filtervorrichtung (1) nach Anspruch 1, wobei eine Kammer (21) zwischen einem Außengehäuse (13) des Kartuschenfilters (101) und dem Sitz (17) ausgebildet wird, wenn die Kartusche im Sitz (17) aufgenommen ist, wobei die Kammer (21) zwischen den Filtereinrichtungen (10, 11) und der der Kammer (21) zugewandten Belüftungsöffnung (22) angeordnet ist.

3. Filtervorrichtung (1) nach Anspruch 1 oder 2, die ein zweites Filterelement (11) aufweist, das im Bereich der Auslassöffnung (30) angeordnet ist.

4. Filtervorrichtung (1) nach Anspruch 3, wobei das zweite Filterelement (11) einen entfernbaren Kartuschenfilter (35) aufweist, der an der Auslassöffnung (30) angebracht werden kann.

5. Filtervorrichtung (1) nach Anspruch 3 oder 4, wobei das zweite Filterelement (11) einen Hohlfaserfilter (35) umfasst.

6. Filtervorrichtung (1) nach einem der vorhergehenden Ansprüche, wobei ein Teil der ersten Umfangswand (24) einen Teil eines zusätzlichen Vorratsbehälters (5) zum Speichern von zu filterndem Wasser bildet und die zweite Umfangswand (25) dem Außengehäuse (2) zugewandt ist.

7. Filtervorrichtung (1) nach einem der vorhergehenden Ansprüche, wobei die zweite Umfangswand (25) mit einer Flanschstütze (3) verbunden ist, über die das Trennelement (4) am Außengehäuse (2) aufgehängt ist.

8. Filtervorrichtung (1) nach einem der vorhergehenden Ansprüche, wobei der Raum (23) eine abnehmbare Kappe (26) aufweist.

9. Filtervorrichtung (1) nach einem der vorhergehenden Ansprüche, die ferner einen Griff (8) aufweist, der mit dem Außengehäuse (2) verbunden ist, wobei der Raum im Bereich eines Teils des trichterartigen Trennelements (4), das dem Griff (8) zugewandt ist, ausgebildet ist.

10. Filtervorrichtung (1) nach einem der vorhergehenden Ansprüche, wobei der Sitz (17) und die Auslassöffnung (30) angeordnet sind, dass sie in Bezug auf eine Mittelebene des Außengehäuses (2) versetzt sind.

11. Filtervorrichtung nach einem der vorhergehenden Ansprüche, wobei das Verbindungselement im Bereich eines Kragens (32) angeordnet ist, der am Auslass des trichterartigen Trennelements (4) ausgebildet ist.

12. Filtervorrichtung nach einem der vorhergehenden Ansprüche, wobei der obere Abschnitt des Außengehäuses (2) an oder im Bereich einer Abdeckung (9) angeordnet ist.

13. Filtervorrichtung nach einem der vorhergehenden Ansprüche, wobei die Belüftungsöffnung (22) neben dem Verbindungsabschnitt (18) derart ausgebildet ist, dass sich die Belüftungsöffnung (22) unmittelbar unterhalb einer Umfangskante (14) der Kartusche befindet, wenn der Kartuschenfilter (101) im Sitz (17) aufgenommen ist.

## Revendications

1. Dispositif de filtration (1) de type à percolation comprenant :
un boîtier extérieur (2) ;
un élément de division (4) de type entonnoir qui sert à stocker l'eau à filtrer et qui est reçue dans le boîtier extérieur (2) qui définit un réservoir en dessous de celui-ci pour stocker l'eau filtrée, l'élément de division (4) de type entonnoir étant capable de définir un trajet d'écoulement (7) de l'eau à filtrer ;
un siège (17) qui est formé dans l'élément de division (4) de type entonnoir dans la région du trajet d'écoulement (7) afin de recevoir de manière amovible un premier élément de filtration (10), le premier élément de filtration (10) comprenant un filtre de type cartouche (101) remplaçable ;
une ouverture d'évacuation (30) qui est pour l'eau filtrée provenant du premier élément de filtration (10) et qui est formée dans le siège (17) et qui est capable de recevoir de manière amovible un second élément de filtration (11),
dans lequel une partie de raccordement (18) est définie dans le siège (17), dans la région où le filtre de type cartouche (101) est raccordé de manière étanche dans le siège (17) ;
une ouverture de ventilation (22) qui met en communication le siège (17) avec le côté extérieur du boîtier extérieur (2) ;
dans lequel l'ouverture de ventilation (22) s'ouvre dans le siège (17) dans une direction aval suivant le trajet d'évacuation par rapport à la partie de raccordement (18) et dans lequel l'élément de division (4) de type entonnoir comprend une première paroi périmétrique (24) et une seconde paroi périmétrique (25), entre lesquelles est défini un espace (23) qui définit une expansion de l'ouverture de ventilation (22), **caractérisé en ce que** l'espace (23) s'étend dans une direction verticale sensiblement jusqu'à une partie supérieure du boîtier extérieur (2) et **en ce que** l'élément de division (4) de type entonnoir définit un réservoir (5) qui est destiné au stockage de l'eau à filtrer, le réservoir (5) étant entièrement superposé sur le siège (17), l'ouverture d'évacuation (30) comprenant un élément de raccordement pour un raccordement amovible par rapport au second élément de filtration (11).

2. Dispositif de filtration (1) selon la revendication 1, dans lequel une chambre (21) est définie entre un boîtier extérieur (13) du filtre de type cartouche (101) et le siège (17) quand la cartouche est reçue dans le siège (17), la chambre (21) étant agencée entre les moyens de filtration (10, 11) et l'ouverture de ventilation (22) faisant face à la chambre (21).

3. Dispositif de filtration (1) selon la revendication 1 ou 2, comprenant un second élément de filtration (11) qui est agencé dans la région de l'ouverture d'évacuation (30).

4. Dispositif de filtration (1) selon la revendication 3, dans lequel le second élément de filtration (11) comprend un filtre de type à cartouche (35) amovible qui peut être monté sur l'ouverture d'évacuation (30).

5. Dispositif de filtration (1) selon la revendication 3 ou 4, dans lequel le second élément de filtration (11) comprend un filtre à fibres creuses (35).

6. Dispositif de filtration (1) selon l'une quelconque des revendications précédentes, dans lequel une partie de la première paroi périmétrique (24) définit une partie d'un réservoir (5) supplémentaire pour stocker une eau à filtrer et la seconde paroi périmétrique (25) fait face au boîtier extérieur (2).

7. Dispositif de filtration (1) selon l'une quelconque des revendications précédentes, dans lequel la seconde paroi périmétrique (25) est reliée à un support à bride (3), au moyen duquel l'élément de division (4) est suspendu sur le boîtier extérieur (2).

8. Dispositif de filtration (1) selon l'une quelconque des revendications précédentes, dans lequel l'espace (23) comprend un capuchon (26) amovible.

9. Dispositif de filtration (1) selon l'une quelconque des revendications précédentes, comprenant en outre une poignée (8) qui est reliée au boîtier extérieur (2), l'espace étant construit dans la région d'une partie de l'élément de division (4) de type entonnoir qui fait face à la poignée (8).

10. Dispositif de filtration (1) selon l'une quelconque des revendications précédentes, dans lequel le siège (17) et l'ouverture d'évacuation (30) sont agencés pour être décalés par rapport à un plan central du boîtier extérieur (2).

11. Dispositif de filtration selon l'une quelconque des revendications précédentes, dans lequel l'élément de raccordement est agencé dans la région d'un collier (32) qui est construit à la sortie de l'élément de division (4) de type entonnoir.

12. Dispositif de filtration selon l'une quelconque des revendications précédentes, dans lequel la partie supérieure du boîtier extérieur (2) est agencée au niveau ou dans la région d'un couvercle (9).

13. Dispositif de filtration selon l'une quelconque des revendications précédentes, dans lequel l'ouverture de ventilation (22) est construite adjacente à la partie de raccordement (18) de telle manière que l'ouverture de ventilation (22) est immédiatement en dessous d'un bord périphérique (14) de la cartouche quand le filtre de type cartouche (101) est reçu dans le siège (17).
